# EUROPÄISCHE PATENTSCHRIFT

(11) **EP 3 607 564 B1**
(45) Veröffentlichungstag und Bekanntmachung des Hinweises auf die Patenterteilung: **10.03.2021**
(21) Anmeldenummer: 18702077.1
(22) Anmeldetag: 09.01.2018
(51) Int. Cl.: H01B 3/04, H01B 3/48

(54) **ELEKTROISOLATIONSBAND, ELEKTRISCHE HOCHSPANNUNGSMASCHINE SOWIE VERFAHREN ZUM HERSTELLEN EINES ELEKTROISOLATIONSBANDS UND EINER ELEKTRISCHEN HOCHSPANNUNGSSPANNUNGSMASCHINE**
ELECTRIC ISOLATION TAPE, ELECTRICAL HIGH VOLTAGE MACHINE AND METHOD FOR PRODUCING AN ELECTRIC ISOLATION TAPE AND AN ELECTRIC HIGH VOLTAGE MACHINE
BANDE D'ISOLATION ÉLECTRIQUE, MACHINE ÉLECTRIQUE HAUTE TENSION ET PROCÉDÉ DE FABRICATION D'UNE BANDE D'ISOLATION ÉLECTRIQUE ET MACHINE ÉLECTRIQUE HAUTE TENSION

(30) Priorität: 04.04.2017 EP 17164715
(43) Veröffentlichungstag der Anmeldung: 12.02.2020
(73) Patentinhaber: Siemens Energy Global GmbH & Co. KG, 81739 München (DE)
(72) Erfinder: MASHKIN, Andrey, 50672 Köln (DE); BROCKSCHMIDT, Mario, 45131 Essen (DE); POHLMANN, Friedhelm, 45355 Essen (DE)
(86) Internationale Anmeldenummer: PCT/EP2018/050401
(87) Internationale Veröffentlichungsnummer: WO 2018/184740

(56) Entgegenhaltungen:
- EP-A1- 3 091 049
- WO-A1-00/57429
- WO-A1-2016/050450

## Beschreibung

Die Erfindung betrifft ein Elektroisolationsband für eine elektrische Hochspannungsmaschine und ein Verfahren zum Herstellen des Elektroisolationsbands.

Eine elektrische Hochspannungsmaschine, wie beispielsweise ein Generator und/oder ein Motor, weist einen elektrischen Leiter, ein Elektroisolationssystem und ein Blechpaket auf. Das Elektroisolationssystem hat den Zweck, die elektrischen Leiter dauerhaft gegeneinander, gegen das Blechpaket und gegen die Umgebung elektrisch zu isolieren. Beim Betrieb der elektrischen Maschine treten elektrische Teilentladungen auf, die zur Ausbildung von sog. "Treeing"- Kanälen in dem Elektroisolationssystem führen. Im Bereich der "Treeing"-Kanäle ist das Elektroisolationssystem nur noch reduziert elektrisch belastbar und es kann zu einem elektrischen Durchschlag durch das Elektroisolationssystem kommen. Eine Barriere gegen die Teilentladungen wird dadurch erreicht, dass ein Elektroisolationsband in dem Elektroisolationssystem vorgesehen ist. Das Elektroisolationsband weist eine Mehrzahl von Elektroisolationspartikeln, wie beispielsweise Glimmer, auf.

Beim Herstellen des Elektroisolationssystems wird das Elektroisolationsband zunächst um den elektrischen Leiter gewickelt und dann mit einem Imprägnierharz imprägniert. Zum Imprägnieren wird der mit dem Elektroisolationsband umwickelte elektrische Leiter beispielsweise in einer Wanne, in der sich das Imprägnierharz befindet, mit dem Imprägnierharz durchtränkt. Nachteilig jedoch ist, dass sich in dem Elektroisolationssystem Fehlstellen ausbilden können, die nicht von dem Imprägnierharz durchtränkt sind. Im Bereich dieser Fehlstellen können im Betrieb der elektrischen Hochspannungsmaschine Teilentladungen entstehen, die zu der Bildung der "Treeing"-Kanälen führen können. Die Fehlstellen sind somit nachteilig, weil sie zu einer Verkürzung der Lebensdauer der elektrischen Hochspannungsmaschine führen.

Aus der WO2016/050450A1 ist ein Isolationssystem für elektrische Maschinen, insbesondere im Hochspannungsbereich, bekannt, bei dem Tränkharz die Hohlräume und Spalten eines Elektroisolationsbandes füllt und, soweit Porosität besteht, in die festen porösen Materialien eindringt. Einige feste Isolationswerkstoffe, wie Glimmerbänder, Isolationspapiere oder Vliesstoffe, sind dabei extra porös ausgeführt, damit die Tränkharzaufnahme erfolgt.

Aufgabe der Erfindung ist es, ein verbessertes Elektroisolationsband und ein verbessertes Verfahren zu seiner Herstellung bereitzustellen.

Die Erfindung löst die Aufgabe durch ein Elektroisolationsband für eine elektrische Hochspannungsmaschine nach Anspruch 1 und ein Verfahren zum Herstellen eines Elektroisolationsbands nach Anspruch 7.

Das erfindungsgemäße Isolationsband weist im Bereich der Abstandshalterpartikel eine erhöhte Porosität auf, wodurch eine verbesserte Imprägnierung mit einem Imprägnierharz erreicht wird, was zu weniger Fehlstellen im Elektroisolationsband und somit zu einer erhöhten Lebensdauer des Elektroisolationsbands sowie damit auch einer mit einem solchen Band ausgerüsteten Hochspannungsmaschine führt.

Bezüglich des Verfahrens zur Herstellung des Elektroisolationsbands wurde auch eine verkürzte Zeit bis zum vollständigen Durchtränken des Elektroisolationsbands mit dem Imprägnierharz beobachtet, was zu einer Reduktion der Personalkosten und der Prozesskosten führt.

In einer ersten Ausführungsform weist das erfindungsgemäße Elektroisolationsband für eine elektrische Hochspannungsmaschine einen imprägnierbaren Partikelverbund, der eine Mehrzahl von plättchenförmigen Elektroisolationspartikeln aufweist, und erste Abstandshalterpartikel auf, die auf einer Oberfläche des Elektroisolationsbands aufgebracht sind, so dass die Porosität des Elektroisolationsbands im Bereich der ersten Abstandshalterpartikel höher als im Bereich des imprägnierbaren Partikelverbundes ist. In dieser Ausführungsform sind keine der Abstandshalterpartikel in dem imprägnierbaren Partikelverbund vorgesehen.

In einer zweiten Ausführungsform weist das erfindungsgemäße Elektroisolationsband für eine elektrische Hochspannungsmaschine einen imprägnierbaren Partikelverbund auf, der eine Mehrzahl von plättchenförmigen Elektroisolationspartikeln und zwischen den plättchenförmigen Elektroisolationspartikeln verteilt angeordnete, zweite Abstandshalterpartikel aufweist, so dass die Porosität des imprägnierbaren Partikelverbundes höher als in dem entsprechenden imprägnierbaren Partikelverbund ohne die zweiten Abstandshalterpartikel ist. In dieser Ausführungsform sind keine der Abstandshalterpartikel auf der Oberfläche des Elektroisolationsbands vorgesehen.

In einer dritten Ausführungsform weist das erfindungsgemäße Elektroisolationsband für eine elektrische Hochspannungsmaschine einen imprägnierbaren Partikelverbund, der eine Mehrzahl von plättchenförmigen Elektroisolationspartikeln aufweist, und erste Abstandshalterpartikel auf, die auf einer Oberfläche des Elektroisolationsbands aufgebracht sind, wobei der imprägnierbare Partikelverbund zwischen den plättchenförmigen Elektroisolationspartikeln verteilt angeordnete, zweite Abstandshalterpartikel aufweist, so dass die Porosität des imprägnierbaren Partikelverbundes höher als in dem entsprechenden imprägnierbaren Partikelverbund ohne die zweiten Abstandshalterpartikel ist und die Porosität des Elektroisolationsbands im Bereich der ersten Abstandshalterpartikel höher ist als im Bereich des entsprechenden imprägnierbaren Partikelverbundes ohne die zweiten Abstandshalterpartikel.

Das erfindungsgemäße Elektroisolationsband weist die ersten Abstandshalterpartikel und/oder die zweiten Abstandshalterpartikel auf, die die Porosität des Elektroisolationsbands erhöhen. Durch diese Erhöhung der Porosität lässt sich durch ein Imprägnieren des Elektroisolationsbands mit einem Imprägnierharz ein Elektroisolationssystem herstellen, das keine Fehlstellen hat, die nicht von dem Imprägnierharz durchtränkt sind. Dadurch neigt die elektrische Hochspannungsmaschine weniger zu der Ausbildung von Teilentladungen, wodurch die elektrische Hochspannungsmaschine vorteilhaft eine lange Lebensdauer hat. Die Erfinder haben überraschenderweise festgestellt, dass sich durch die erhöhte Porosität die Zeit zu dem vollständigen Durchtränken des Elektroisolationsbands mit dem Imprägnierharz verkürzen lässt. Dadurch, dass sich die Zeit bis zu dem vollständigen Durchtränken des Elektroisolationsbands verkürzen lässt, führt dies zu einer Reduktion der Personalkosten und der Prozesskosten.

Durch die Vermeidung der Fehlstellen können sich in dem Elektroisolationssystem keine Grenzflächen zwischen von dem Imprägnierharz freien Bereichen und von dem Imprägnierharz durchtränkten Bereichen ausbilden. Diese Grenzflächen sind nachteilig, weil sich dort Risse bilden können oder dort eine Delaminierung stattfinden kann. Die Vermeidung einer Bildung von den Rissen und einer Delaminierung führt zu einer Erhöhung der Lebensdauer der elektrischen Hochspannungsmaschine.

Die Porosität ist hier das Verhältnis aus dem Volumen aller Poren in dem Elektroisolationsband zu dem Gesamtvolumen des Elektroisolationsbands.

Die plättchenförmigen Elektroisolationspartikel weisen bevorzugt Glimmer und/oder Aluminiumoxid auf. Diese Substanzen haben vorteilhaft eine hohe Beständigkeit gegenüber Teilentladungen.

Es ist bevorzugt, dass die ersten Abstandshalterpartikel und/oder die zweiten Abstandshalterpartikel ein Epoxid, ein Elastomer, ein Thermoplast und/oder anorganische Substanzen, insbesondere Titanoxid und/oder Aluminiumoxid, aufweisen, wobei die Abstandshalterpartikel insbesondere zwei Volumenbereiche mit unterschiedlichen chemischen Substanzen aufweisen, wobei der eine Volumenbereich den anderen Volumenbereich, der insbesondere im Wesentlichen kugelförmig ist, bereichsweise oder vollständig umschließt. Die Abstandshalterpartikel können derart gewählt werden, dass sich die Abstandshalterpartikel während eines Imprägnierens und/oder eines Härtens beispielsweise aufgrund einem bei dem Imprägnieren und/oder bei dem Härten vorliegenden Druck und/oder einer Temperatur zumindest teilweise in dem Imprägnierharz auflösen und/oder sich während des Imprägnierens und/oder des Härtens verformen. Durch das Auflösen und/oder Verformen entstehen zwischen den Abstandshalterpartikeln und dem Imprägnierharz keine zusätzlichen Grenzflächen. Damit kann der Bildung von den Rissen und der Delaminierung in dem Elektroisolationssystem entgegengewirkt werden, wodurch dessen Lebensdauer und damit die Lebensdauer der elektrischen Hochspannungsmaschine verlängert werden. Weiterhin verringern sich durch das Auflösen und/oder Verformen der Abstandshalterpartikel die Poren in dem Elektroisolationsband und/oder in dem Elektroisolationssystem, so dass sich die restlichen Bestandteile des Elektroisolationsbands relaxieren können. Beispielsweise vergrößern sich die Abstände der Elektroisolationspartikel zueinander in dem Partikelverbund, wenn sie sich aufgelöst haben, und der Partikelverbund kann nun in dieses, durch das Auflösen der Abstandshalterpartikel, entstandene Volumen expandieren. Dies ermöglicht eine bessere Durchtränkung des Partikelverbunds und zugleich eine gleichmäßigere Verteilung der Elektroisolationspartikel in dem Elektroisolationssystem, so dass keine ausgeprägten Grenzflächen entstehen, was der Bildung von den Rissen und der Delaminierung entgegengewirkt.

Der eine Volumenbereich kann dabei an seiner nach außen gewandten Fläche die Form einer Kugeloberfläche haben. Weiterhin ist es möglich, dass die Abstandshalterpartikel, wenn sie die zwei Volumenbereiche mit den unterschiedlichen chemischen Substanzen aufweisen, innen die anorganischen Substanzen und außen die Epoxide, die Elastomere und/oder die Thermoplasten, aufweisen. Dabei ist denkbar, dass sich bei dem Imprägnieren und/oder bei dem Härten lediglich die Epoxide, die Elastomere und/oder die Thermoplasten auflösen und/oder verformen.

Die Abstandshalterpartikel liegen bevorzugt als ein Agglomerat vor. Dabei ist es denkbar, dass die Abstandshalterpartikel derart gewählt sind, dass bei dem Imprägnieren und/oder bei dem Härten die Mechanismen zur Bildung der Agglomerate außer Kraft gesetzt werden, so dass sich die Agglomerate in die einzelnen Abstandshalterpartikel auflösen. Insbesondere kann dabei, wenn die Abstandshalterpartikel die zwei Volumenbereiche mit den unterschiedlichen chemischen Substanzen aufweisen, das Imprägnierharz mit dem äußeren Volumenbereich der Abstandshalterpartikel wechselwirken und somit die Mechanismen zur Bildung der Agglomerate aufheben.

Das Imprägnierharz ist bevorzugt ausgewählt aus einer Gruppe aufweisend Polyester-Derivate, insbesondere ungesättigte Polyesterimide, Bisphenol-A-diglycidylether, Bisphenol-F-diglycidylether, Phenolnovolake, aliphatische Epoxide und/oder cycloaliphatische Epoxide.

Die ersten Abstandshalterpartikel und die zweiten Abstandshalterpartikel sind bevorzugt ausgewählt aus einer Gruppe aufweisend Bisphenol-A-diglycidylether, Bisphenol-F-diglycidylether, Phenolnovolake, aliphatische Epoxide und/oder cycloaliphatische Epoxide. Das Elastomer weist bevorzugt ein Styrol-Butadien-Kautschuk auf. Der Thermoplast weist bevorzugt ein Acrylnitril-Butadien-Styrol, ein Polyamid, ein Polylactat und/oder ein Polymethylmethacrylat auf.

Die ersten Abstandshalterpartikel und/oder die zweiten Abstandshalterpartikel weisen beispielsweise eine Beschichtung auf, um die Fließfähigkeit des Imprägnierharzes lokal zu verbessern. Bei der Beschichtung kann es sich beispielsweise um eine Silangruppe handeln. Die Silangruppe reagieren vorteilhafterweise nicht mit dem Imprägnierharz. Dadurch, dass die ersten Abstandshalterpartikel und/oder die zweiten Abstandshalterpartikel die Fließfähigkeit des Imprägnierharzes lokal verbessern, verkürzt sich vorteilhaft das Imprägnieren des Elektroisolationsbands.

Die ersten Abstandshalterpartikel und/oder die zweiten Abstandshalterpartikel sind bevorzugt im Wesentlichen kugelförmig. Die kugelförmige Form ist insbesondere für die zweiten Abstandshalterpartikel, die in den Partikelverbund eingebracht werden, von Vorteil, um auch bei Kontakt von den plättchenförmigen Elektroisolationspartikeln mit den zweiten Abstandshalterpartikeln eine hohe Porosität in dem Elektroisolationsband zu erhalten.

Die zweiten Abstandshalterpartikel weisen in dem Fall, dass sie im Wesentlichen kugelförmig sind, bevorzugt einen Durchmesser auf, der länger ist als die durchschnittliche Dicke der plättchenförmigen Elektroisolationspartikel, da sich dadurch die hohe Porosität in dem Elektroisolationsband ausbildet.

Die ersten Abstandshalterpartikel und/oder die zweiten Abstandshalterpartikel weisen beispielhaft eine Größe im Bereich von 10 nm bis 80 µm auf, wobei die Größe die längste Erstreckung in den Abstandshalterpartikeln ist. Dabei können die ersten Abstandshalterpartikel eine andere Größenverteilung als die zweiten Abstandshalterpartikel haben. Insbesondere können die ersten Abstandshalterpartikel eine größere mittlere Partikelgröße als die zweiten Abstandshalterpartikel haben. Die ersten Abstandshalterpartikel können beispielhaft als plättchenförmige Partikel ausgebildet sein. Dadurch eignen sich die ersten Abstandshalterpartikel besonders gut zum Halten eines Abstands zwischen unmittelbar benachbart angeordneten Elektroisolationsbändern oder unmittelbar benachbart angeordneten Abschnitten des gleichen Elektroisolationsbands, insbesondere weil eine Oberfläche des Elektroisolationsbands oft uneben ist.

In einer bevorzugten Ausführungsform ist der imprägnierbare Partikelverbund auf ein Trägermaterial aufgebracht, das einen Strick, insbesondere einen Glasstrick, einen Vlies, einen Schaum, insbesondere einen offenporiger Schaum, einen Glasroving, ein Gewebe und/oder eine Harzmatte, die insbesondere Glas und/oder Kunststoff aufweisende Fasern aufweisen. Dadurch erhöht sich die Festigkeit des Elektroisolationsbands und dessen Verarbeitbarkeit wird vereinfacht. Das Trägermaterial ist vorzugsweise porös, damit es von dem Imprägnierharz durchtränkbar ist. Das Trägermaterial ist bevorzugt elektrisch nicht leitfähig. Das Trägermaterial ist beispielsweise mit dem Partikelverbund verklebt.

Eine mit dem erfindungsgemäßen Elektroisolationsband ausgerüstete elektrische Hochspannungsmaschine weist einen elektrischen Leiter, ein Elektroisolationsband, das um den elektrischen Leiter gewickelt ist, und ein Imprägnierharz auf, wobei das Elektroisolationsband von dem Imprägnierharz durchtränkt ist und das Imprägnierharz ausgehärtet ist.

Das Elektroisolationsband ist bevorzugt teilweise mit sich selbst überlappend um den elektrischen Leiter gewickelt.

In einem ersten erfindungsgemäßen Verfahren zum Herstellen eines Elektroisolationsbands weist das Verfahren folgende Schritte auf: a) Herstellen eines imprägnierbaren Partikelverbunds, der eine Mehrzahl von plättchenförmigen Elektroisolationspartikeln aufweist; b) Herstellen des Elektroisolationsbands, das den imprägnierbaren Partikelverbund und erste Abstandshalterpartikel aufweist, die auf einer Oberfläche des Elektroisolationsbands aufgebracht werden, insbesondere indem eine Dispersion, die die ersten Abstandshalterpartikel und ein Fluid aufweist, auf die Oberfläche gesprüht wird, so dass die Porosität des Elektroisolationsbands im Bereich der ersten Abstandshalterpartikel höher als im Bereich des imprägnierbaren Partikelverbundes ohne die zweiten Abstandshalterpartikel ist. In diesem Verfahren sind keine der Abstandshalterpartikel in dem imprägnierbaren Partikelverbund vorgesehen.

In einem zweiten erfindungsgemäßen Verfahren zum Herstellen eines Elektroisolationsbands weist das Verfahren folgende Schritte auf: a) Herstellen eines imprägnierbaren Partikelverbunds, der eine Mehrzahl von plättchenförmigen Elektroisolationspartikeln und zwischen den plättchenförmigen Elektroisolationspartikeln verteilt angeordnete, zweite Abstandshalterpartikel aufweist; b) Herstellen des Elektroisolationsbands, das den imprägnierbaren Partikelverbund aufweist, wobei die Porosität des imprägnierbaren Partikelverbundes höher als in dem entsprechenden imprägnierbaren Partikelverbund ohne die zweiten Abstandshalterpartikel ist. In diesem Verfahren sind keine der Abstandshalterpartikel auf der Oberfläche des Elektroisolationsbands vorgesehen.

In einem dritten erfindungsgemäßen Verfahren zum Herstellen eines Elektroisolationsbands weist das Verfahren folgende Schritte auf: a) Herstellen eines imprägnierbaren Partikelverbunds, der eine Mehrzahl von plättchenförmigen Elektroisolationspartikeln und zwischen den plättchenförmigen Elektroisolationspartikeln verteilt angeordnete, zweite Abstandshalterpartikel aufweist; b) Herstellen des Elektroisolationsbands, das den imprägnierbaren Partikelverbund und erste Abstandshalterpartikel aufweist, die auf einer Oberfläche des Elektroisolationsbands aufgebracht werden, insbesondere indem eine Dispersion, die die ersten Abstandshalterpartikel und ein Fluid aufweist, auf die Oberfläche gesprüht wird, so dass die Porosität des imprägnierbaren Partikelverbundes höher als in dem entsprechenden imprägnierbaren Partikelverbund ohne die zweiten Abstandshalterpartikel ist und die Porosität des Elektroisolationsbands im Bereich der ersten Abstandshalterpartikel höher ist als im Bereich des entsprechenden imprägnierbaren Partikelverbundes ohne die zweiten Abstandshalterpartikel.

Der imprägnierbare Partikelverbund kann beispielsweise hergestellt werden, indem eine Dispersion der plättchenförmigen Elektroisolationspartikel in einem Trägerfluid, wie beispielsweise Wasser, hergestellt wird. Die Dispersion wird anschließend sedimentiert, wodurch ein Bodensatz entsteht, der die plättchenförmigen Elektroisolationspartikel aufweist. Danach wird das Trägerfluid von dem Bodensatz entfernt, wodurch der Bodensatz den Partikelverbund bildet. Die ersten Abstandshalterpartikel die insbesondere mit einer Dispersion auf die Oberfläche des Partikelverbunds oder auf die Oberfläche des Elektroisolationsbands aufgebracht werden, können beispielhaft von Hand oder maschinell aufgesprüht werden.

Es ist bevorzugt, dass die ersten Abstandshalterpartikel und/oder die zweiten Abstandshalterpartikel im Wesentlichen kugelförmig sind.

Bevorzugt weist das Verfahren den Schritt auf: a1) Aufbringen des imprägnierbaren Partikelverbunds auf ein Trägermaterial, das einen Strick, insbesondere einen Glasstrick, einen Vlies, einen Schaum, insbesondere einen offenporiger Schaum, einen Glasroving, ein Gewebe und/oder eine Harzmatte, die insbesondere Glas und/oder Kunststoff aufweisende Fasern aufweisen.

Erfindungsgemäß weist das Verfahren zum Herstellen einer elektrischen Hochspannungsmaschine folgende zusätzliche Schritte auf: c) Bereitstellen eines gemäß vorangegangener Verfahren hergestellten Elektroisolationsbands und eines elektrischen Leiters; d) Umwickeln des elektrischen Leiters mit dem Elektroisolationsband; e) Durchtränken des Elektroisolationsbands mit einem Imprägnierharz; und f) Härten des Imprägnierharzes.

Bevorzugt werden in dem Schritt e) und oder dem Schritt f) die ersten Abstandshalterpartikel und/oder die zweiten Abstandshalterpartikel zumindest teilweise in dem Imprägnierharz aufgelöst und/oder die ersten und/oder die zweiten Abstandshalterpartikel verformen sich. Dies kann beispielsweise derart erfolgen, dass die Schmelztemperatur und/oder Druckfestigkeit der ersten Abstandshalterpartikel und/oder der zweiten Abstandshalterpartikel derart gewählt wird, dass sie niedriger als die Temperatur und/oder der Druck ist, die das Imprägnierharz bei dem Imprägnieren und/oder bei dem Härten hat. Die Schmelztemperatur kann beispielsweise durch eine Wahl der Kettenlänge der Epoxide der ersten Abstandshalterpartikel und/oder der zweiten Abstandshalterpartikel eingestellt werden.

Es ist bevorzugt, dass die ersten Abstandshalterpartikel und/oder die zweiten Abstandshalterpartikel ein Epoxid, ein Elastomer, ein Thermoplast und/oder anorganische Substanzen, insbesondere Titanoxid und/oder Aluminiumoxid, aufweisen, wobei die Abstandshalterpartikel insbesondere zwei Volumenbereiche mit unterschiedlichen chemischen Substanzen aufweisen, wobei der eine Volumenbereich den anderen Volumenbereich, der insbesondere im Wesentlichen kugelförmig ist, bereichsweise oder vollständig umschließt.

Es ist denkbar, dass die ersten Abstandshalterpartikel auf einer ersten Seite und/oder auf einer zweiten Seite, die ein Teil der Oberfläche des Elektroisolationsbands sind, des Elektroisolationsbands aufgebracht sind. Dadurch verbessern sich die Eigenschaften hinsichtlich Durchtränkbarkeit des Elektroisolationsbands erheblich. Die Begriffe "erste Seite" und "zweite Seite" beziehen sich auf die breiten Seiten des Elektroisolationsbands, das heißt auf die zwei voneinander abgewandten Seiten, deren Erstreckung in einem Querschnitt durch das Elektroisolationsband um ein Vielfaches länger ist als die Erstreckung der anderen beiden voneinander abgewandten Seiten. Die Oberfläche, auf welche die ersten Abstandshalterpartikel vorzugsweise aufgebracht werden, sind jene, deren Erstreckung im Querschnitt durch das Elektroisolationsband um ein Vielfaches länger ist, als die Erstreckung der anderen beiden sich gegenüberliegenden Seiten. Die ersten Abstandshalterpartikel können beispielsweise auch auf zwei, drei oder vier Seiten des Elektroisolationsbands aufgebracht werden.

Das Durchtränken des Elektroisolationsbands mit dem Imprägnierharz und/oder das Härten des Imprägnierharz erfolgen vorzugsweise durch einen Vakuum-Druck-Imprägnierungs-Prozess (VPI, vacuum pressure impregnation) und/oder ein Resin-Rich-Verfahren. Bei beiden Verfahren wird eine Temperatur eingestellt, bei der ein Härter mit dem Imprägnierharz reagiert, so dass das Imprägnierharz teilweise geliert. Das Härten des Imprägnierharzes erfolgt bei einer höheren Temperatur als das Imprägnieren, um die Polymerisierung des Imprägnierharzes zu ermöglichen, beispielsweise bei etwa 150°C oder höher. Der Härter ist bevorzugt je nach dem eingesetzten Imprägnierharz zu wählen und weist besonders bevorzugt Dicyandiamid und/oder 4,4'-Diaminodiphenylsulfon auf.

Im Folgenden werden bevorzugte Ausführungsformen einer erfindungsgemäßen elektrischen Hochspannungsmaschine mit einem erfindungsgemäßen Elektroisolationsband anhand schematischer Zeichnungen dargestellt.
- Figur 1: zeigt eine schematische Darstellung der elektrischen Hochspannungsmaschine.
- Figur 2: zeigt eine schematische Darstellung von zwei Lagen des Elektroisolationsbands vor einer Imprägnierung mit einem Imprägnierharz.
- Figur 3: zeigt eine schematische Darstellung von den zwei Lagen des Elektroisolationsbands nach oder während der Imprägnierung mit dem Imprägnierharz.
- Figur 4: zeigt eine schematische Detailansicht eines Partikelverbunds.

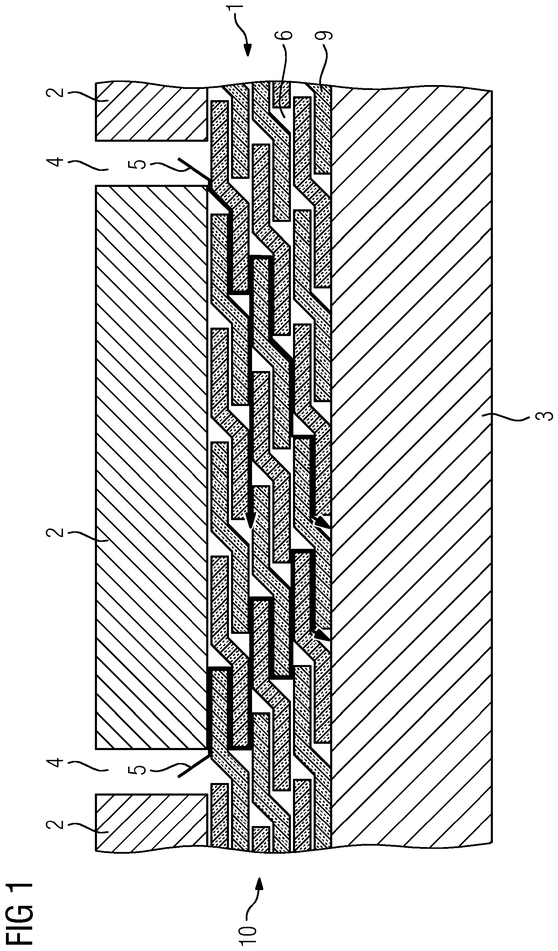

Wie es aus den Figuren 1 bis 4 ersichtlich ist, weist eine elektrische Hochspannungsmaschine 10 ein Blechpaket 2 und einen elektrischen Leiter 3 auf. Die elektrische Hochspannungsmaschine 10 kann beispielsweise ein elektrischer Generator und/oder ein elektrischer Motor sein. Das Blechpaket 2 weist mehrere Kühlaussparungen 4 auf. Die Kühlaussparungen 4 dienen einer möglichst effizienten Kühlung, indem ein Kühlfluid in die unmittelbare Nähe des elektrischen Leiters 3 strömen kann. Zusätzlich wird über die Kühlaussparungen 4 ein Imprägnierharz in das Elektroisolationsband 9 eingebracht. Zum elektrischen Isolieren des elektrischen Leiters 3 weist die elektrische Hochspannungsmaschine 10 ein Elektroisolationsband 9 auf, das um den elektrischen Leiter 3 gewickelt ist. Der mit dem Elektroisolationsband 9 umwickelte elektrische Leiter 3 ist in der elektrischen Hochspannungsmaschine 10 in einer Nut im Blechpaket 2 angeordnet. Wie es in Figur 1 ersichtlich ist, weist die elektrische Hochspannungsmaschine 10 mehrere Lagen eines Elektroisolationsbands 9 auf, das derart um den elektrischen Leiter 3 gewickelt ist, dass sich eine erste Windung des Elektroisolationsbands 9 mit einer der ersten Windung benachbarten zweiten Windung des Elektroisolationsbands 9 teilweise mit sich selbst überlappt. Durch diese überlappende Windung befinden sich ein erster Abschnitt der ersten Windung in einer Ebene mit einem ersten radialen Abstand zu dem elektrischen Leiter 3 und ein zweiter Abschnitt der ersten Windung in einer anderen Ebene mit einem zweiten radialen Abstand, der verschieden von dem ersten radialen Abstand ist, zu dem elektrischen Leiter 3. In jenem Übergangsbereich zwischen der einen Ebene und der anderen Ebene bilden sich Wicklungshohlräume 6 aus. Die Wicklungshohlräume 6 sind für eine gute Durchtränkung des Elektroisolationsbands 9 vorteilhaft, weil hier das Imprägnierharz leicht strömbar ist. Werden die verschiedenen Lagen des Elektroisolationsbands 9 mit dem Imprägnierharz durchtränkt und ausgehärtet, bildet sich ein das Elektroisolationsband 9 und das Imprägnierharz aufweisendes Elektroisolationssystem 1 aus. Die Durchtränkung der verschiedenen Lagen des Elektroisolationsbands 9 erfolgt beispielhaft entlang der in Figur 1 eingezeichneten Imprägnierharzpenetrierungspfade 5, die auch insbesondere durch die Wicklungshohlräume 6 führen.

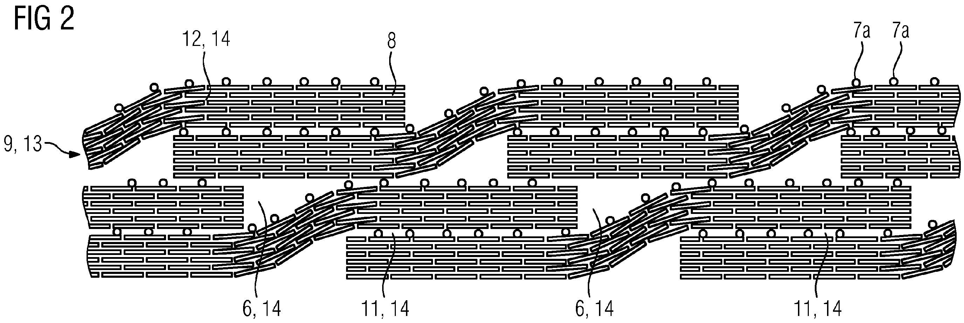

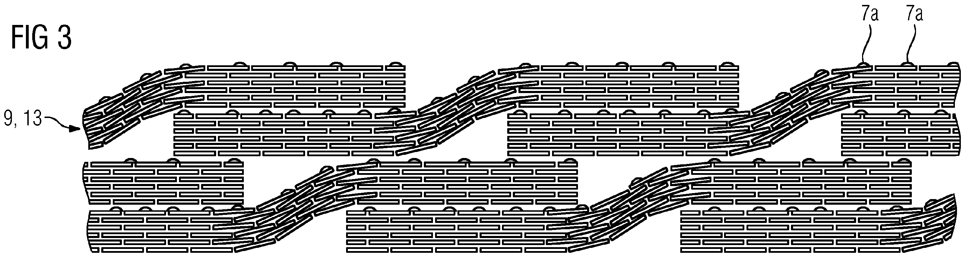

Figuren 2 und 3 zeigen eine erste Ausführungsform des Elektroisolationsbands 9. Das Elektroisolationsband 9 weist einen imprägnierbaren Partikelverbund 13a, der eine Mehrzahl von plättchenförmigen Elektroisolationspartikeln 8 aufweist, und erste Abstandshalterpartikel 7a auf. Die plättchenförmigen Elektroisolationspartikel 8 sorgen dafür, dass eine ungewollte Teilentladung zwischen dem Blechpaket 2 und dem elektrischen Leiter 3 vermieden wird. Dazu können die plättchenförmigen Elektroisolationspartikel 8 Glimmer und/oder Aluminiumoxid aufweisen, insbesondere können die plättchenförmigen Elektroisolationspartikel 8 aus Glimmer oder Aluminiumoxid bestehen. In Figur 2 sind auf einer ersten Seite des Elektroisolationsbands 9, die im Vergleich zu einer zweiten Seite des Elektroisolationsbands 9 einen größeren radialen Abstand zu dem elektrischen Leiter 3 hat, mehrere erste Abstandshalterpartikel 7a benachbart angeordnet. Die ersten Abstandshalterpartikel 7a können beispielsweise auch auf der zweiten Seite des Elektroisolationsbands 9 und/oder auf allen vier Seiten des Elektroisolationsbands 9 aufgebracht sein. Die ersten Abstandshalterpartikel 7a sorgen für eine erhöhte Porosität im Elektroisolationsband 9 im Vergleich zu einem Elektroisolationsband 9 ohne die ersten Abstandshalterpartikel 7a. Dadurch, dass die ersten Abstandshalterpartikel 7a den radialen Abstand in dem Bereich, in dem sich die benachbarten Windungen des Elektroisolationsbands 9 überlappen, verlängern, vergrößern sich auch die Wicklungshohlräume 6, was die Durchtränkbarkeit des gewickelten Elektroisolationsbands 9 weiter erhöht. Figur 2 zeigt das Elektroisolationsband 9 vor dem Durchtränken mit dem Imprägnierharz.

Figur 3 zeigt die erste Ausführungsform nach oder während des Durchtränkens mit dem Imprägnierharz oder nach oder während des Härtens des Imprägnierharzes. Der Unterschied zu Figur 2 besteht darin, dass die ersten Abstandshalterpartikel 7a nicht mehr kugelförmig sind, sondern sich zumindest teilweise in dem Imprägnierharz aufgelöst haben. Die ersten Abstandshalterpartikel 7a können sich zumindest teilweise in dem Imprägnierharz auflösen. In der schematischen Figur 3 sind die ersten Abstandshalterpartikel 7a in einem Übergangszustand dargestellt. Dieser Übergangszustand zeigt die ersten Abstandshalterpartikel 7a weder kugelförmig, noch im Imprägnierharz vollständig aufgelöst, sondern in einem dazwischenliegenden Stadium. In diesem Stadium vergrößern sich die interpartikulären Abstände, was die Durchtränkbarkeit des gewickelten Elektroisolationsbands 9 weiter erhöht. Aufgrund der verbesserten Durchtränkbarkeit ist das Elektroisolationssystem 1 nach dem Härten elastischer. Somit bezieht sich die Figur 3 bevorzugt auf einen Zeitpunkt während des Imprägnierungsprozesses oder des Härtungsprozesses und nicht auf einen Zeitpunkt nach dem Härten. Ein Auflösen der ersten Abstandshalterpartikel 7a kann beispielsweise derart erfolgen, dass die Schmelztemperatur der ersten Abstandshalterpartikel 7a derart gewählt wird, dass sie niedriger als die Temperatur ist, die das Imprägnierharz bei dem Imprägnieren und/oder bei dem Härten hat. Die Schmelztemperatur kann beispielsweise durch eine Wahl der Kettenlänge der Epoxide der ersten Abstandshalterpartikel 7a eingestellt werden.

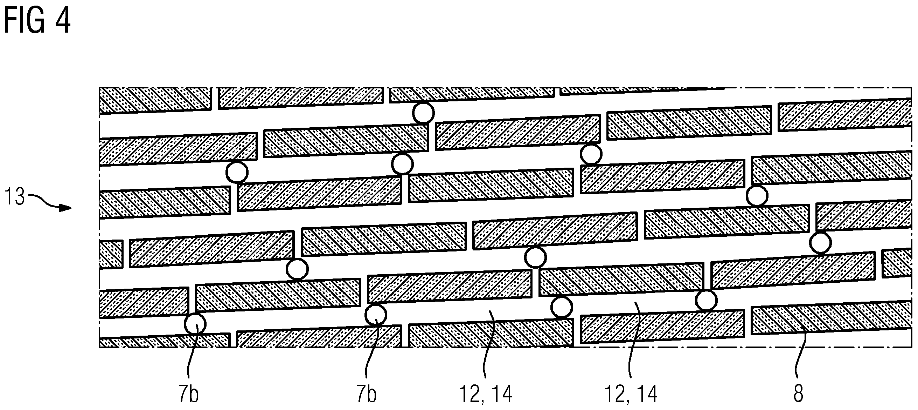

Figur 4 zeigt eine Detailansicht einer zweiten Ausführungsform des Elektroisolationsbands 9. Das Elektroisolationsband 9 weist einen imprägnierbaren Partikelverbund 13b auf, der eine Mehrzahl von plättchenförmigen Elektroisolationspartikeln 8 aufweist. Die plättchenförmigen Elektroisolationspartikel 8 können Glimmer und/oder Aluminiumoxid aufweisen, insbesondere können die plättchenförmigen Elektroisolationspartikel 8 aus Glimmer oder Aluminiumoxid bestehen. Dabei weist der Partikelverbund 13b mehreren Lagen von benachbart angeordneten plättchenförmigen Elektroisolationspartikeln 8 auf. Die benachbart angeordneten plättchenförmigen Elektroisolationspartikel 8 weisen aufgrund ihrer Plättchenform zwei große Oberflächen, die voneinander abgewandt sind, und mehrere kleine Oberflächen, auf. Im imprägnierbaren Partikelverbund 13 sind die plättchenförmigen Elektroisolationspartikel 8 einer Lage derart angeordnet, dass eines der plättchenförmigen Elektroisolationspartikeln 8 einem anderen der plättchenförmigen Elektroisolationspartikeln 8 mit einer der kleinen Oberflächen zugewandt ist. Zwischen den plättchenförmigen Elektroisolationspartikeln 8 sind mehrere zweite Abstandshalterpartikel 7b verteilt angeordnet. Die zweiten Abstandshalterpartikel 7b können dabei zwischen verschiedenen Lagen der plättchenförmigen Elektroisolationspartikel 8 und/oder zwischen verschiedenen plättchenförmigen Elektroisolationspartikeln 8 einer Lage angeordnet sein. Dadurch, dass die zweiten Abstandshalterpartikel 7b zwischen den plättchenförmigen Elektroisolationspartikeln 8 angeordnet sind, erhöht sich die Porosität des Elektroisolationsbands 9 im imprägnierbaren Partikelverbund 13. Dies führt wiederum zu einer verbesserten Durchtränkbarkeit der eng aneinander liegenden plättchenförmigen Elektroisolationspartikel 8 und somit zu einer besseren Durchtränkbarkeit des imprägnierbaren Partikelverbunds 13b und des gesamten Elektroisolationsbands 9. Die zweiten Abstandshalterpartikel 7b können beispielhaft ein Epoxid, ein Elastomer, ein Thermoplast und/oder anorganische Substanzen, insbesondere Titanoxid und/oder Aluminiumoxid, aufweisen, wobei die Abstandshalterpartikel 7a, 7b zwei Volumenbereiche mit unterschiedlichen chemischen Substanzen aufweisen, wobei der eine Volumenbereich den anderen Volumenbereich, der insbesondere im Wesentlichen kugelförmig ist, bereichsweise oder vollständig umschließt. Die kugelförmige Form ist insbesondere für die zweiten Abstandshalterpartikel 7b, die in den imprägnierbaren Partikelverbund 13b eingebracht werden, von Vorteil, um auch bei Kontakt von den plättchenförmigen Elektroisolationspartikeln 8 mit den zweiten Abstandshalterpartikeln 7b eine hohe Porosität in dem Elektroisolationsband 9 zu erhalten. Die zweiten Abstandshalterpartikel 7b weisen in dem Fall, dass sie im Wesentlichen kugelförmig sind, bevorzugt einen Durchmesser auf, der zwischen 10 nm und im Wesentlichen der durchschnittlichen Dicke der plättchenförmigen Elektroisolationspartikel 8 liegt, da sich dadurch eine hohe Porosität in dem Elektroisolationsband 9 ausbildet.

## Patentansprüche

1. Elektroisolationsband (9) für eine elektrische Hochspannungsmaschine (10),
mit einem imprägnierbaren Partikelverbund (13b), der eine Mehrzahl von plättchenförmigen Elektroisolationspartikeln (8) aufweist, und ersten Abstandshalterpartikeln (7a), die auf eine Oberfläche des Elektroisolationsbands (9) aufgebracht sind, so dass die Porosität des Elektroisolationsbands (9) im Bereich der ersten Abstandshalterpartikel (7a) höher als im Bereich des imprägnierbaren Partikelverbundes (13b) ist.

2. Elektroisolationsband (9) für eine elektrische Hochspannungsmaschine (10), mit einem imprägnierbaren Partikelverbund (13a), der eine Mehrzahl von plättchenförmigen Elektroisolationspartikeln (8) und zwischen den plättchenförmigen Elektroisolationspartikeln (8) verteilt angeordnete, zweite Abstandshalterpartikel (7b) aufweist, so dass die Porosität des imprägnierbaren Partikelverbundes (13a) höher als in dem entsprechenden imprägnierbaren Partikelverbund (13b) ohne die zweiten Abstandshalterpartikel (7b) ist.

3. Elektroisolationsband (9) für eine elektrische Hochspannungsmaschine (10), mit einem imprägnierbaren Partikelverbund (13a), der eine Mehrzahl von plättchenförmigen Elektroisolationspartikeln (8) aufweist, und erste Abstandshalterpartikel (7a), die auf eine Oberfläche des Elektroisolationsbands (9) aufgebracht sind, wobei der imprägnierbare Partikelverbund (13a) zwischen den plättchenförmigen Elektroisolationspartikeln verteilt angeordnete, zweite Abstandshalterpartikel (7b) aufweist, so dass die Porosität des imprägnierbaren Partikelverbundes (13a) höher als in dem entsprechenden imprägnierbaren Partikelverbund (13b) ohne die zweiten Abstandshalterpartikel (7b) ist und die Porosität des Elektroisolationsbands (9) im Bereich der ersten Abstandshalterpartikel (7a) höher ist als im Bereich des entsprechenden imprägnierbaren Partikelverbundes (13b) ohne die zweiten Abstandshalterpartikel (7b).

4. Elektroisolationsband (9) gemäß einem der Ansprüche 1 bis 3,
wobei die ersten Abstandshalterpartikel (7a) und/oder die zweiten Abstandshalterpartikel (7b) ein Epoxid, ein Elastomer, ein Thermoplast und/oder anorganische Substanzen, insbesondere Titanoxid und/oder Aluminiumoxid, aufweisen, wobei die Abstandshalterpartikel (7a, 7b) insbesondere zwei Volumenbereiche mit unterschiedlichen chemischen Substanzen aufweisen, wobei der eine Volumenbereich den anderen Volumenbereich, der insbesondere im Wesentlichen kugelförmig ist, bereichsweise oder vollständig umschließt.

5. Elektroisolationsband (9) gemäß einem der Ansprüche 1 bis 4,
wobei die ersten Abstandshalterpartikel (7a) und/oder die zweiten Abstandshalterpartikel (7b) im Wesentlichen kugelförmig sind.

6. Elektroisolationsband (9) gemäß einem der Ansprüche 1 bis 5,
wobei der imprägnierbare Partikelverbund (13a, 13b) auf ein Trägermaterial aufgebracht ist, das einen Strick, insbesondere einen Glasstrick, einen Vlies, einen Schaum, insbesondere einen offenporiger Schaum, einen Glasroving, ein Gewebe und/oder eine Harzmatte, die insbesondere Glas und/oder Kunststoff aufweisende Fasern aufweisen.

7. Verfahren zum Herstellen eines Elektroisolationsbands (9) mit den Schritten:
a) Herstellen eines imprägnierbaren Partikelverbunds (13b), der eine Mehrzahl von plättchenförmigen Elektroisolationspartikeln (8) aufweist;
b) Herstellen des Elektroisolationsbands (9), das den imprägnierbaren Partikelverbund (13b) und erste Abstandshalterpartikel (7a) aufweist, die auf eine Oberfläche des Elektroisolationsbands (9) aufgebracht werden, insbesondere indem eine Dispersion, die die ersten Abstandshalterpartikel (7a) und ein Fluid aufweist, auf die Oberfläche gesprüht wird, so dass die Porosität des Elektroisolationsbands (9) im Bereich der ersten Abstandshalterpartikel (7a) höher als im Bereich des imprägnierbaren Partikelverbundes (13b) ist.

8. Verfahren zum Herstellen eines Elektroisolationsbands (9) mit den Schritten:
a) Herstellen eines imprägnierbaren Partikelverbunds (13a), der eine Mehrzahl von plättchenförmigen Elektroisolationspartikeln (8) und zwischen den plättchenförmigen Elektroisolationspartikeln (8) verteilt angeordnete zweite Abstandshalterpartikel (7b), aufweist;
b) Herstellen des Elektroisolationsbands (9), das den imprägnierbaren Partikelverbund (13a) aufweist, wobei die Porosität des imprägnierbaren Partikelverbunds (13a) höher als in dem entsprechenden imprägnierbaren Partikelverbund (13b) ohne die zweiten Abstandshalterpartikel (7b) ist.

9. Verfahren zum Herstellen eines Elektroisolationsbands (9) mit den Schritten:
a) Herstellen eines imprägnierbaren Partikelverbunds (13a), der eine Mehrzahl von plättchenförmigen Elektroisolationspartikeln (8) und zwischen den plättchenförmigen Elektroisolationspartikeln (8) verteilt angeordnete, zweite Abstandshalterpartikel (7b) aufweist;
b) Herstellen des Elektroisolationsbands (9), das den imprägnierbaren Partikelverbund (13a) und erste Abstandshalterpartikel (7a) aufweist, die auf der Oberfläche des Elektroisolationsbands (9) aufgebracht werden, insbesondere indem eine Dispersion, die die ersten Abstandshalterpartikel (7a) und ein Fluid aufweist, auf die Oberfläche gesprüht wird, so dass die Porosität des imprägnierbaren Partikelverbundes (13a) höher als in dem entsprechenden imprägnierbaren Partikelverbund (13b) ohne die zweiten Abstandshalterpartikel (7b) ist und die Porosität des Elektroisolationsbands (9) im Bereich der ersten Abstandshalter Partikel (7a) höher ist als im Bereich des entsprechenden imprägnierbaren Partikelverbundes (13b) ohne die zweiten Abstandshalterpartikel (7b).

10. Verfahren gemäß einem der Ansprüche 7 bis 9,
wobei die ersten Abstandshalterpartikel (7a) und/oder die zweiten Abstandshalterpartikel (7b) im Wesentlichen kugelförmig sind.

11. Verfahren gemäß einem der Ansprüche 7 bis 10,
wobei in Schritt a1) der imprägnierbare Partikelverbund (13a, 13b) auf ein Trägermaterial aufgebracht wird, das einen Strick, insbesondere einen Glasstrick, einen Vlies, einen Schaum, insbesondere einen offenporiger Schaum, einen Glasroving, ein Gewebe und/oder eine Harzmatte, die insbesondere Glas und/oder Kunststoff aufweisende Fasern aufweisen.

12. Verfahren zum Herstellen einer elektrischen Hochspannungsmaschine (1) mit den Schritten:
c) Bereitstellen eines gemäß einem der Ansprüche 7 bis 11 hergestellten Elektroisolationsbands und eines elektrischen Leiters (3);
d) Umwickeln des elektrischen Leiters (3) mit dem Elektroisolationsband (9);
e) Durchtränken des Elektroisolationsbands (9) mit einem Imprägnierharz; und
f) Härten des Imprägnierharzes.

13. Verfahren gemäß Anspruch 12,
bei dem in dem Schritt e) und/oder dem Schritt f) die ersten Abstandshalterpartikel (7a) und/oder die zweiten Abstandshalterpartikel (7b) zumindest teilweise in dem Imprägnierharz aufgelöst werden und/oder sich verformen.

14. Verfahren gemäß Anspruch 12 oder 13,
bei dem die ersten Abstandshalterpartikel (7a) und/oder die zweiten Abstandshalterpartikel (7b) ein Epoxid, ein Elastomer, ein Thermoplast und/oder anorganische Substanzen, insbesondere Titanoxid und/oder Aluminiumoxid, aufweisen, wobei die Abstandshalterpartikel (7a, 7b) insbesondere zwei Volumenbereiche mit unterschiedlichen chemischen Substanzen aufweisen, wobei der eine Volumenbereich den anderen Volumenbereich, der insbesondere im Wesentlichen kugelförmig ist, bereichsweise oder vollständig umschließt.

15. Verfahren gemäß einem der Ansprüche 12 bis 14,
bei dem die ersten Abstandshalterpartikel (7a) und/oder die zweiten Abstandshalterpartikel (7b) als ein Agglomerat vorliegen, die in Schritt e) und/oder in Schritt f) in die einzelnen ersten Abstandshalterpartikel (7a) und/oder in die einzelnen Abstandshalterpartikel (7b) aufgelöst werden.

## Claims

1. Electrical insulation tape (9) for a high-voltage electrical machine (10),
comprising an impregnatable particle composite (13b) comprising a plurality of laminar electrical insulation particles (8), and first spacer particles (7a) applied to a surface of the electrical insulation tape (9), such that the porosity of the electrical insulation tape (9) is higher in the region of the first spacer particles (7a) than in the region of the impregnatable particle composite (13b).

2. Electrical insulation tape (9) for a high-voltage electrical machine (10), comprising an impregnatable particle composite (13a) comprising a plurality of laminar electrical insulation particles (8) and second spacer particles (7b) arranged in a manner distributed between the laminar electrical insulation particles (8), such that the porosity of the impregnatable particle composite (13a) is higher than in the corresponding impregnatable particle composite (13b) without the second spacer particles (7b).

3. Electrical insulation tape (9) for a high-voltage electrical machine (10), comprising an impregnatable particle composite (13a) comprising a plurality of laminar electrical insulation particles (8), and first spacer particles (7a) applied to a surface of the electrical insulation tape (9), wherein the impregnatable particle composite (13a) comprises second spacer particles (7b) arranged in a manner distributed between the laminar electrical insulation particles, such that the porosity of the impregnatable particle composite (13a) is higher than in the corresponding impregnatable particle composite (13b) without the second spacer particles (7b) and the porosity of the electrical insulation tape (9) is higher in the region of the first spacer particles (7a) than in the region of the corresponding impregnatable particle composite (13b) without the second spacer particles (7b).

4. Electrical insulation tape (9) according to any of Claims 1 to 3,
wherein the first spacer particles (7a) and/or the second spacer particles (7b) comprise an epoxy, an elastomer, a thermoplastic and/or inorganic substances, in particular titanium oxide and/or aluminum oxide,
wherein the spacer particles (7a, 7b) have in particular two volume regions comprising different chemical substances, wherein one volume region regionally or completely encloses the other volume region, which is substantially spherical, in particular.

5. Electrical insulation tape (9) according to any of Claims 1 to 4,
wherein the first spacer particles (7a) and/or the second spacer particles (7b) are substantially spherical.

6. Electrical insulation tape (9) according to any of Claims 1 to 5,
wherein the impregnatable particle composite (13a, 13b) is applied to a carrier material comprising a knitted fabric, in particular a glass knitted fabric, a nonwoven, a foam, in particular an open-pored foam, a glass roving, a woven fabric and/or a resin mat comprising fibers comprising glass and/or plastic, in particular.

7. Method for producing an electrical insulation tape (9) comprising the following steps:
a) producing an impregnatable particle composite (13b) comprising a plurality of laminar electrical insulation particles (8);
b) producing the electrical insulation tape (9) comprising the impregnatable particle composite (13b) and first spacer particles (7a) applied to a surface of the electrical insulation tape (9), in particular by a dispersion that comprises the first spacer particles (7a) and a fluid being sprayed onto the surface, such that the porosity of the electrical insulation tape (9) is higher in the region of the first spacer particles (7a) than in the region of the impregnatable particle composite (13b).

8. Method for producing an electrical insulation tape (9) comprising the following steps:
a) producing an impregnatable particle composite (13a) comprising a plurality of laminar electrical insulation particles (8) and second spacer particles (7b) arranged in a manner distributed between the laminar electrical insulation particles (8);
b) producing the electrical insulation tape (9) comprising the impregnatable particle composite (13a), wherein the porosity of the impregnatable particle composite (13a) is higher than in the corresponding impregnatable particle composite (13b) without the second spacer particles (7b).

9. Method for producing an electrical insulation tape (9) comprising the following steps:
a) producing an impregnatable particle composite (13a) comprising a plurality of laminar electrical insulation particles (8) and second spacer particles (7b) arranged in a manner distributed between the laminar electrical insulation particles (8);
b) producing the electrical insulation tape (9) comprising the impregnatable particle composite (13a) and first spacer particles (7a) applied to the surface of the electrical insulation tape (9), in particular by a dispersion that comprises the first spacer particles (7a) and a fluid being sprayed onto the surface, such that the porosity of the impregnatable particle composite (13a) is higher than in the corresponding impregnatable particle composite (13b) without the second spacer particles (7b) and the porosity of the electrical insulation tape (9) is higher in the region of the first spacer particles (7a) than in the region of the corresponding impregnatable particle composite (13b) without the second spacer particles (7b).

10. Method according to any of Claims 7 to 9,
wherein the first spacer particles (7a) and/or the second spacer particles (7b) are substantially spherical.

11. Method according to any of Claims 7 to 10,
wherein in step a1) the impregnatable particle composite (13a, 13b) is applied to a carrier material comprising a knitted fabric, in particular a glass knitted fabric, a nonwoven, a foam, in particular an open-pored foam, a glass roving, a woven fabric and/or a resin mat comprising fibers comprising glass and/or plastic, in particular.

12. Method for producing a high-voltage electrical machine (1) comprising the following steps:
c) providing an electrical insulation tape produced according to any of Claims 7 to 11 and an electrical conductor (3);
d) winding the electrical insulation tape (9) around the electrical conductor (3);
e) impregnating the electrical insulation tape (9) with an impregnating resin; and
f) curing the impregnating resin.

13. Method according to Claim 12,
wherein in step e) and/or step f) the first spacer particles (7a) and/or the second spacer particles (7b) at least partly are dissolved in the impregnating resin and/or become deformed.

14. Method according to Claim 12 or 13,
wherein the first spacer particles (7a) and/or the second spacer particles (7b) comprise an epoxy, an elastomer, a thermoplastic and/or inorganic substances, in particular titanium oxide and/or aluminum oxide, wherein the spacer particles (7a, 7b) have in particular two volume regions comprising different chemical substances, wherein one volume region regionally or completely encloses the other volume region, which is substantially spherical, in particular.

15. Method according to any of Claims 12 to 14,
wherein the first spacer particles (7a) and/or the second spacer particles (7b) are present as an agglomerate, which are broken up into the individual first spacer particles (7a) and/or into the individual spacer particles (7b) in step e) and/or in step f) .

## Revendications

1. Bande d'isolation électrique (9) pour une machine électrique à haute tension (10),
avec un composé imprégnable à particules (13b) qui comprend une pluralité de particules d'isolation électrique en forme de plaquettes (8), et des premières particules d'écartement (7a) qui sont appliquées sur une surface de bande d'isolation électrique (9), de façon à ce que la porosité de la bande d'isolation électrique (9) au niveau des premières particules d'écartement (7a) soit plus élevée qu'au niveau du composé imprégnable à particules (13b).

2. Bande d'isolation électrique (9) pour une machine électrique à haute tension (10), avec un composé imprégnable à particules (13a) qui comprend une pluralité de particules d'isolation électrique en forme de plaquettes (8) et qui comprend des deuxièmes particules d'écartement (7b) disposées de manière répartie entre les particules d'isolation électrique en forme de plaquettes (8), de façon à ce que la porosité du composé imprégnable à particules (13a) soit plus élevée que dans le composé imprégnable à particules (13b) correspondant sans les deuxièmes particules d'écartement (7b).

3. Bande d'isolation électrique (9) pour une machine électrique à haute tension (10), avec un composé imprégnable à particules (13a) qui comprend une pluralité de particules d'isolation électrique en forme de plaquettes (8) et qui comprend des premières particules d'écartement (7a) qui sont appliquées sur une surface de bande d'isolation électrique (9), dans laquelle le composé imprégnable à particules (13a) comprend des deuxièmes particules d'écartement (7b) disposées de manière répartie entre les particules d'isolation électrique en forme de plaquettes, de façon à ce que la porosité du composé imprégnable à particules (13a) soit plus élevée que dans le composé imprégnable à particules (13b) correspondant sans les deuxièmes particules d'écartement (7b) et la porosité de la bande d'isolation électrique (9) au niveau des premières particules d'écartement (7a) soit plus élevée qu'au niveau du composé imprégnable à particules (13b) correspondant sans les deuxièmes particules d'écartement (7b).

4. Bande d'isolation électrique (9) selon l'une des revendications 1 à 3,
dans laquelle les premières particules d'écartement (7a) et/ou les deuxièmes particules d'écartement (7b) comprennent un époxyde, un élastomère, un thermoplastique et/ou des substances inorganiques, plus particulièrement de l'oxyde de titane et/ou de l'oxyde d'aluminium,
dans laquelle les particules d'écartement (7a, 7b) comprennent plus particulièrement deux parties de volumes avec des substances chimiques différentes, dans laquelle une partie de volume entoure, à certains endroits ou entièrement, l'autre partie de volume, qui présente plus particulièrement globalement une forme sphérique.

5. Bande d'isolation électrique (9) selon l'une des revendications 1 à 4,
dans laquelle les premières particules d'écartement (7a) et/ou les deuxièmes particules d'écartement (7b) présentent globalement une forme sphérique.

6. Bande d'isolation électrique (9) selon l'une des revendications 1 à 5,
dans laquelle le composé imprégnable à particules (13a, 13b) est appliqué sur un matériau de support qui comprend un tricot, plus particulièrement un tricot de verre, un non-tissé, une mousse, plus particulièrement une mousse à alvéoles ouverts, un roving de verre, un tissu et/ou un tapis de résine, qui comprennent plus particulièrement des fibres comprenant du verre et/ou une matière plastique.

7. Procédé de fabrication d'une bande d'isolation électrique (9), avec les étapes suivantes :
a) fabrication d'un composé imprégnable à particules (13b) qui comprend une pluralité de particules d'isolation électrique en forme de plaquettes (8) ;
b) fabrication de la bande d'isolation électrique (9) qui comprend le composé imprégnable à particules (13b) et des premières particules d'écartement (7a) qui sont appliquées sur une surface de la bande d'isolation électrique (9), plus particulièrement en pulvérisant, sur la surface, une dispersion qui comprend les premières particules d'écartement (7a) et un fluide, de façon à ce que la porosité de la bande d'isolation électrique (9) au niveau des premières particules d'écartement (7a) soit plus élevée qu'au niveau du composé imprégnable à particules (13b).

8. Procédé de fabrication d'une bande d'isolation électrique (9), avec les étapes suivantes :
a) fabrication d'un composé imprégnable à particules (13a) qui comprend une pluralité de particules d'isolation électrique en forme de plaquettes (8) et des deuxièmes particules d'écartement (7b) disposées de manière répartie entre les particules d'isolation électrique en forme de plaquettes (8) ;
b) fabrication de la bande d'isolation électrique (9) qui comprend le composé imprégnable à particules (13a), dans laquelle la porosité du composé imprégnable à particules (13a) est plus élevée que dans le composé imprégnable à particules (13b) sans les deuxièmes particules d'écartement (7b).

9. Procédé de fabrication d'une bande d'isolation électrique (9), avec les étapes suivantes :
a) fabrication d'un composé imprégnable à particules (13a) qui comprend une pluralité de particules d'isolation électrique en forme de plaquettes (8) et des deuxièmes particules d'écartement (7b) disposées de manière répartie entre les particules d'isolation électrique en forme de plaquettes (8) ;
b) fabrication de la bande d'isolation électrique (9) qui comprend le composé imprégnable à particules (13a) et des premières particules d'écartement (7a), qui sont appliquées sur la surface de la bande d'isolation électrique (9), plus particulièrement en pulvérisant, sur la surface, une dispersion qui comprend les premières particules d'écartement (7a) et un fluide, de façon à ce que la porosité du composé imprégnable à particules (13a) soit plus élevée que dans le composé imprégnable à particules (13b) correspondant sans les deuxièmes particules d'écartement (7b) et la porosité de la bande d'isolation électrique (9) au niveau des premières particules d'écartement (7a) soit plus élevée qu'au niveau du composé imprégnable à particules (13b) sans les deuxièmes particules d'écartement (7b).

10. Procédé selon l'une des revendications 7 à 9,
dans lequel les premières particules d'écartement (7a) et/ou les deuxièmes particules d'écartement (7b) présentent globalement une forme sphérique.

11. Procédé selon l'une des revendications 7 à 10,
dans lequel, à l'étape a1), le composé imprégnable à particules (13a, 13b) est appliqué sur un matériau de support qui comprend un tricot, plus particulièrement un tricot de verre, un non-tissé, une mousse, plus particulièrement une mousse à alvéoles ouverts, un roving de verre, un tissu et/ou un tapis de résine, qui comprennent plus particulièrement des fibres comprenant du verre et/ou une matière plastique.

12. Procédé de fabrication d'une machine électrique à haute tension (1) avec les étapes suivantes :
c) mise à disposition d'une bande d'isolation électrique fabriquée selon l'une des revendications 7 à 11 et d'un conducteur électrique (3) ;
d) enroulement du conducteur électrique (3) avec la bande d'isolation électrique (9) ;
e) imprégnation de la bande d'isolation électrique (9) avec une résine d'imprégnation ; et
f) durcissement de la résine d'imprégnation.

13. Procédé selon la revendication 12,
dans lequel, à l'étape e) et/ou à l'étape f), les premières particules d'écartement (7a) et/ou les deuxièmes particules d'écartement (7b) sont au moins partiellement dissoutes dans la résine d'imprégnation et/ou se déforment.

14. Procédé selon la revendication 12 ou 13,
dans lequel les premières particules d'écartement (7a) et/ou les deuxièmes particules d'écartement (7b) comprennent un époxyde, un élastomère, un thermoplastique et/ou des substances inorganiques, plus particulièrement de l'oxyde de titane et/ou de l'oxyde d'aluminium, dans lequel les particules d'écartement (7a, 7b) comprennent plus particulièrement deux parties de volumes avec des substances chimiques différentes, dans lequel une partie de volume entoure, à certains endroits ou entièrement, l'autre partie de volume, qui présente plus particulièrement globalement une forme sphérique.

15. Procédé selon l'une des revendications 12 à 14,
dans lequel les premières particules d'écartement (7a) et/ou les deuxièmes particules d'écartement (7b) existent sous la forme d'un agglomérat qui est dissout, à l'étape e) et/ou à l'étape f), dans les différentes premières particules d'écartement (7a) et/ou dans les différentes deuxièmes particules d'écartement (7b).
